# EUROPEAN PATENT SPECIFICATION

(11) **EP 3 949 034 B1**
(45) Date of publication and mention of the grant of the patent: **11.11.2026**
(21) Application number: 20718232.0
(22) Date of filing: 02.04.2020
(51) Int. Cl.: H01R 39/58, F03D 17/00, F03D 80/80, H01R 39/26, F03D 80/50

(54) **BRUSH WEAR MONITORING ARRANGEMENT AND METHOD THEREOF**
BÜRSTENVERSCHLEISSÜBERWACHUNGSANORDNUNG UND VERFAHREN DAFÜR
AGENCEMENT DE SURVEILLANCE DE L'USURE DE BROSSES ET MÉTHODE ASSOCIÉE

(30) Priority: 02.05.2019 EP 19172179
(43) Date of publication of application: 09.02.2022
(73) Proprietor: Siemens Gamesa Renewable Energy A/S, 7330 Brande (DK)
(72) Inventor: DEVARAJ, Aravind, Kakkanad West Kochi 682030 (IN); SULAIMAN, Sajeesh, Bangalore 560087 (IN)
(74) Representative: SGRE-Association
(86) International application number: PCT/EP2020/059326
(87) International publication number: WO 2020/221542

(56) References cited:
- CN-U- 208 432 701
- DE-A1- 102013 213 389
- US-A1- 2014 091 918
- US-A1- 2016 211 634
- US-A1- 2017 133 807
- US-A1- 2018 301 861
- US-B1- 6 580 511

## Description

The invention describes a brush wear monitoring arrangement, and a method of monitoring wear on a carbon brush.

An electrical machine such as a generator may include a number of "carbon brushes" at the interface between the rotating part and the stationary part of the electrical machine. The term "carbon brush" is generally used to refer to block made from sintering or baking a mixture of a conductive powder and a binder, with an embedded conductor cable protruding from one face. Such carbon brushes are used to provide a current path for lightning current or leakage current from one part of the electrical machine to the other part, which is electrically grounded. For example, several such carbon brushes may be mounted at an interface between the outer rotor and the inner stator of a direct-drive wind turbine. Equally, several such carbon brushes may be mounted at an interface between the rotating hub and a stationary part in the nacelle of a wind turbine.

A carbon brush is generally made in the form of a rectangular block and is held in a correspondingly shaped brush holder. The brush holder can be mounted to either the rotating part or the stationary part of the electrical machine. From the point of view of the carbon brush, it is held stationary relative to a rotating surface (which can be the rotor or the stator), and its contact face is pressed against that rotating surface. To provide a reliable current path, the brush holder generally also comprises a robust spring assembly that applies continual pressure against the rear face of the carbon brush so that its contact face always makes good contact with the rotating surface. The friction between the contact face of the carbon brush and the rotating surface gradually wears the brush down, until ultimately it must be replaced.

Without the current path provided by these carbon brushes at the rotational/stationary interface, severe damage may arise in the event of a lightning strike to the nacelle or to a rotor blade, for example, since the very large current may be unable to find an easy path to electrical ground, and a lightning electromagnetic pulse (LEMP) or flashover may result. This can lead to severe damage. Therefore, it is very important that the carbon brushes are always fully functional, i.e. the carbon brushes must be replaced before they wear down too far and lose their effectiveness. Replacement can be easily done if the carbon brushes are readily accessible for visual inspection. US 2018/0301861 A1 shows a brush holder apparatus having a stationary support member having two opposing grooves, a fork electrical connector, and a conductive bar configured to pass through a portion of a main body of the stationary support member. A brush lead is connected to the brush and a brush terminal. The brush lead is an elongate conductive member, and a brush wear indicator is disposed over the brush lead. However, in the case of wind turbines, for example wind turbines of an offshore wind park, service routines are associated with significant costs and are generally only scheduled when absolutely necessary. It is therefore not possible to frequently check on the status of carbon brushes and to only replace the ones that are close to the end of their lifetime. Instead, the operator of a wind turbine or wind park generally relies on an estimation of brush lifetime, but schedules the brush replacement at the same time as other service tasks in order to avoid unnecessary costs. On the one hand, this can lead to unnecessary replacement of only partly worn brushes. On the other hand, the scheduled brush replacement may come too late since not all brushes of the same type wear down at the same rate. This can result in the undesirable situation of ineffective brushes going unnoticed, with the attendant risk of damage to the wind turbine. In a prior art approach to monitoring brush wear for carbon brushes of a wind power plant, US 2014/091918 A1 proposes attaching a transponder unit to a carbon brush, and using a transceiver/receiver unit to track the progress of the transponder unit as the carbon brush wears down. However, this would be prohibitively expensive for a wind park with many wind turbines, each with many carbon brushes. US 2017/133807 A1 discloses image-based monitoring of brush wear in a brush holder assembly. A marker tracks longitudinal movement of the brush, and images of the marker are evaluated to determine the wear state, wear rate or remaining life expectancy of the brush. The system may also allow off-site monitoring via a central control unit.

It is therefore an object of the invention to provide a better way of detecting wear in such a carbon brush.

This object is achieved by the brush wear monitoring arrangement of claim 1; and by the method of claim 13 of monitoring wear on a carbon brush.

According to the invention, the brush wear monitoring arrangement comprises a carbon brush realised to transfer electric current between the stationary part and the rotating part of an electrical machine; a visual wear indicator arranged on a side face of the carbon brush; a brush holder realised to accommodate the carbon brush, and provided with an aperture that exposes a portion of the wear indicator when the carbon brush is arranged in the holder; and a monitoring means for observing the exposed portion of the wear indicator during usage of the carbon brush. The monitoring means comprises an image sensor configured to capture images of the exposed portion of the wear indicator during usage of the carbon brush.

In the context of the invention, it may be assumed that the body of the carbon brush is essentially rectangular, so that each side face is rectangular. The wear indicator is formed on at least one of these side rectangular faces. Preferably, the wear indicator extends from the edge closest to the contact face towards the opposite edge (furthest from the contact face).

It shall also be understood that the brush holder or other mechanical component is realised to consistently apply pressure to the brush as described in the introduction, so that the brush's contact face is continually pressed against the rotating surface.

The inventive brush wear monitoring arrangement may be used in any electrical machine that implements carbon brushes at an interface between its rotating part and its stationary part. For example, a wind turbine according to the invention comprises a generator with a rotor and a stator, a number of carbon brushes for transferring electric current - which may be lightning current or leakage current - between the rotor and the stator. At least one of these carbon brushes is part of an embodiment of the inventive brush wear monitoring arrangement. If all carbon brushes of one rotating/stationary interface are replaced at the same time, monitoring the wear of one of those brushes may be enough to identify the timeframe in which all brushes should be replaced, since it may be expected that all brushes will wear down evenly.

According to the invention, the method of monitoring wear on a carbon brush comprises at least the steps of: providing a wear indicator on a side surface of the carbon brush; arranging the carbon brush in a brush holder; providing an aperture in the brush holder, which aperture is shaped to expose a portion of the wear indicator; and monitoring the exposed portions of the wear indicator to estimate the remaining lifetime of the carbon brush by providing an image sensor configured to capture images of the exposed portion of the wear indicator during usage of the carbon brush.

The inventive method provides a convenient and reliable way of determining the wear status of a carbon brush. Instead of relying on an estimation of the expected lifetime and including a safety margin,

Particularly advantageous embodiments and features of the invention are given by the dependent claims, as revealed in the following description. Features of different claim categories may be combined as appropriate to give further embodiments not described herein.

In the following, it may be assumed that a carbon brush is used in a wind turbine to provide a current path across an interface between a rotating part and a stationary part. In the context of the invention, the terms "carbon brush", "graphite brush" and simply "brush" are synonyms and may be used interchangeably in the following.

A wear indicator shall be understood to extend along a side of the carbon brush, i.e. to extend from one edge (near the contact face) to the opposite edge. The wear indicator can be any element or structure that can be detected optically or otherwise. For example, a wear indicator can be provided in the form of a trough or groove that is shallow at one end (e.g. at the end closest to the contact face) and becomes progressively deeper in the direction of the other end. Brush wear can then be detected by using a laser to measure the depth of the groove. When the depth reaches a predetermined limit, this can be interpreted as an indication that the brush needs replacement.

However, forming the brush to include such a groove may add to manufacturing costs and might possibly detract from the structural integrity of the brush. Therefore, according to the invention, the wear indicator is visual, i.e. it can be monitored or observed using an optical arrangement.

For example, the wear indicator can be provided as a sticker that can be pressed onto the side face of the carbon brush. Alternatively, the wear indicator can be painted or printed onto a side face of the carbon brush. The monitoring means comprises a suitable optical arrangement, for example an image sensor arranged to capture an image of the aperture and the exposed portion of the wear indicator. Images of the aperture and the visible portion of the wear indicator can be captured at regular intervals, for example once per day, once per week, or as appropriate - depending on the type of brush being monitored and the electrical machine in which it is installed. In the following, it may be assumed that the monitoring arrangement includes such an optical arrangement. The images may be stored and processed locally (e.g. in a memory unit that is part of a control arrangement of the electrical machine) or transmitted to a remote location (e.g. to a remote operator of a wind turbine) for processing.

In its simplest form, the wear indicator can be a clearly discernible mark (e.g. a white dot on the black graphite body) applied to the side face at the end furthest from the contact face. The mark may be made in the last quarter of the usable portion of the brush body, for example. As soon as this mark appears in the aperture, it is a sign that the brush is approaching the end of its lifetime and should be replaced.

Since more detailed insight into the current wear status of a brush can be desirable, for example to be better able to include brush replacement tasks with other scheduled service routines, in a particularly preferred embodiment of the invention the wear indicator exhibits a smooth transition from an initial colour to a final colour. For example, the wear indicator extends from the edge at the contact face in the direction of the opposite end of the brush, and gradually changes from a first colour to a second colour. The wear indicator then presents a type of "value scale" which transitions smoothly from the first colour to the second colour. A value scale can be interpreted as a smooth transition from 0% (first colour) to 100% (second colour), for example. 50% would be a colour or shade that is halfway between the first and second colours (for example a grey that is halfway between white and black). The percentage can be translated as "consumed lifetime", so that the gradual increase of the second colour goes in step with increasing wear of the carbon brush. With a suitable image processing technique, it is relatively straightforward to analyse the sequence of images to determine the extent of wear of the brush and to estimate the remining lifetime.

In the following, it may be assumed that the first colour commences at the end closest to the contact face and may be referred to as the "initial colour", and the second colour is at the end furthest from the contact face and may be referred to as the "final colour". The wear indicator is preferably placed on the brush body so that the appearance of the final colour in the aperture indicates that the brush is approaching its end-of-life. The operator then has sufficient time (for example a month or more) to schedule a replacement.

Preferably, the wear indicator exhibits a high contrast ratio between the first colour and the second colour. For example, the initial colour may be black, and the final colour may be white, since these are optically easy to distinguish. In such an embodiment, the appearance of white will be interpreted to mean that end-of-life is imminent. Of course, the order of the colours may be reversed, so that the complete disappearance of white will be associated with imminent end-of-life.

Other realisations are possible, and the wear indicator is not limited to a transition between black (the colour of the graphite block) and another colour such as white. Any two colours may be chosen as initial and final colours, while it is preferable that these have a high contrast ratio. Equally, the wear indicator can be a sticker on which a sequence of multiple colours is printed. For example, a sequence of five different colours can be used to indicate 20%, 40%, 60%, 80% and 100% of the useful lifetime of the brush.

As indicated above, the monitoring means can comprise a suitable image sensor configured to capture images of the exposed portion of the wear indicator during usage of the carbon brush. If the wear indicator is a strip that changes from one colour to a second colour, a simple monochrome image sensor can be used, since it only needs to be able to distinguish between two distinct colours. Preferably, the monitoring means also comprises an image analysis unit that is configured to detect differences in the captured images and to estimate the remaining lifetime of the carbon brush on the basis of the detected differences. For example, if the wear indicator gradually changes from black (the brush is new) to white (the brush is worn), an evaluation of the current "grey" value can indicate the duration of the remining useful lifetime of the carbon brush. If the value of the colour exposed in the aperture of the brush holder is evaluated as 75% (with 100% represented by black and 0% represented by white), then it may be concluded that the brush still has 75% of its remining useful lifetime. If the value of the colour exposed in the aperture of the brush holder is evaluated as only 20%, then it may be concluded that the brush only has one fifth of its remining useful lifetime, and an appropriate signal may be issued to a control arrangement so that a replacement may be scheduled in good time.

In a further preferred embodiment of the invention, a timestamp may be recorded with each captured image. Together with the colour of the wear indicator visible in the aperture, and knowledge of the operating conditions in the electrical machine, this information can be used to obtain a better understanding of the nature of how a specific type of carbon brush wears down. The information can be collected in a database for future reference, and may assist in choosing the right kind of brush for a specific application.

The image sensor used to capture an image of the exposed part of the wear indicator may be located in a line-of-sight to the aperture. Because conditions in an electrical machine such as a wind turbine may generally be dark, the optical arrangement may also include a flash or other suitable source of illumination.

It may not be straightforward to arrange an image sensor of the monitoring means in a line-of-sight to the brush holder aperture. Therefore, in a further preferred embodiment of the invention, the monitoring arrangement comprises a light guide extending between the aperture and the image sensor of the monitoring means. The light guide can be a flexible part such as a transparent bendable rod that can be arranged to traverse a distance from the brush holder to an image sensor arranged at a more convenient location. Another advantage of this arrangement is that the light guide can fill the brush holder aperture, thus preventing the accumulation of dust or other particles in the aperture.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig 1 shows an embodiment of the inventive brush wear monitoring arrangement;
Fig 2 shows a carbon brush for use in the brush wear monitoring arrangement of Fig 1;
Fig 3 shows a brush holder for use in the brush wear monitoring arrangement of Fig 1;
Fig 4 shows alternative wear indicators for application to a carbon brush in an embodiment of the inventive brush wear monitoring arrangement;
Fig 5 shows a further embodiment of the inventive brush wear monitoring arrangement;
Fig 6 shows an electrical machine with an embodiment of the inventive brush wear monitoring arrangement.

In the diagrams, like numbers refer to like objects throughout. Objects in the diagrams are not necessarily drawn to scale.

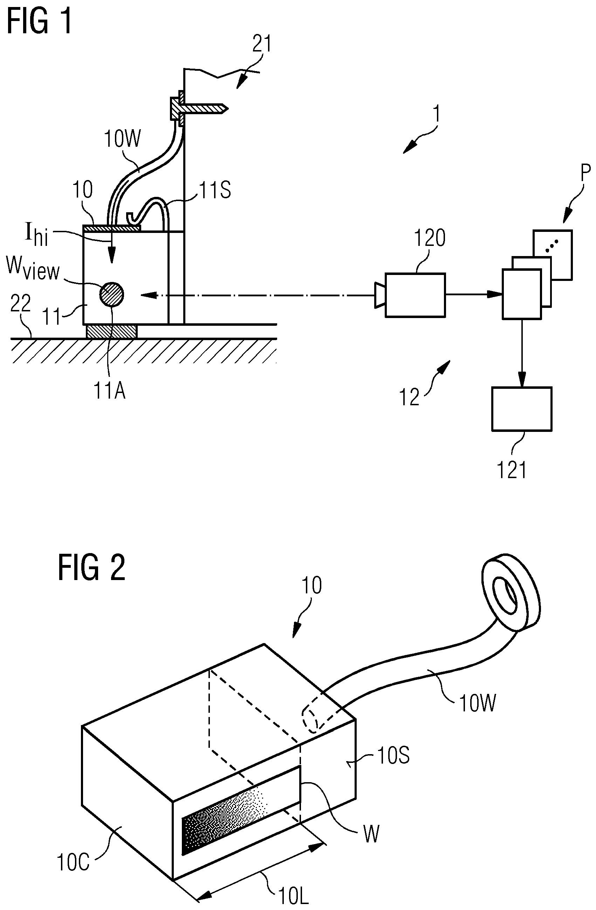

Fig 1 shows an embodiment of the inventive brush wear monitoring arrangement 1, with a brush holder 11 mounted to a stationary component 21 of an electrical machine 2. A carbon brush 10 is contained in the brush holder 11, which includes a spring 11S to apply pressure against the carbon brush 10, thereby pressing its contact face 10C against an electrically conducting surface of the rotating component 22 of the electrical machine 2. A wire 10W or cable extends from within the body of the carbon brush 10 and can be clamped or otherwise attached to the electrically conducting stationary component 21. In this way, the carbon brush 10 provides a path for lightning current Iₕᵢ or leakage current to electrical ground.

The brush holder 11 has been formed to include an aperture 11A or "window" 11A on one side. Through this aperture, a portion W_{view} of a wear indicator W can be seen. The wear indicator W has been attached to the corresponding side face of the carbon brush 10. In this exemplary embodiment, a camera 120 is arranged to have a line-of-sight to the aperture 11A as indicated by the dashed line, so that it can capture an image P of the exposed portion W_{view} of the wear indicator W. The camera 120 can be configured to automatically capture images P at regular intervals, for example once a day, or might be controlled from a remote operator to capture images P at various times. The images P are processed in an image analysis unit 121. This can be local, and may receive the images P from the camera 120 over a suitable interface. Alternatively, the images P may be transmitted, for example over a (wireless) local area network or other suitable communications interface to a remote controller of the electrical machine. Although not shown in the diagram, the monitoring arrangement 1 may also include a flash or other light source to illuminate the exposed portion W_{view} of the wear indicator W in the aperture 11A, so that consistently good-quality images P may be obtained, even if conditions in the electrical machine 2 are dark.

Fig 2 shows a carbon brush 10 for use in the brush wear monitoring arrangement of Fig 1. The diagram shows a wear indicator W applied to a side face 10S of the carbon brush 10. The wear indicator W could be printed directly onto the side face 10S of the carbon brush 10, or - as shown here - printed onto a sticker which is then attached to the carbon brush 10. The wear indicator extends over the effective working length 10L of the carbon brush 10. Usually, a portion of a carbon brush (indicated here by the dotted line) cannot be used, and contains the embedded end of the connector wire 10W. In this exemplary embodiment, the wear indicator W has an initial or first colour Ca at one end (the end nearest the contact face 10C of the carbon brush 10) and gradually transitions to a final or second colour Cz with increasing distance towards the rear of the carbon brush 10. Here, the initial colour Ca is black, and the final colour Cz is white, with an essentially unlimited range of grey shades between the initial black colour Ca and the final white colour Cz. It shall be understood that the body of the carbon brush 10 is also black, although this is not shown in the drawing.

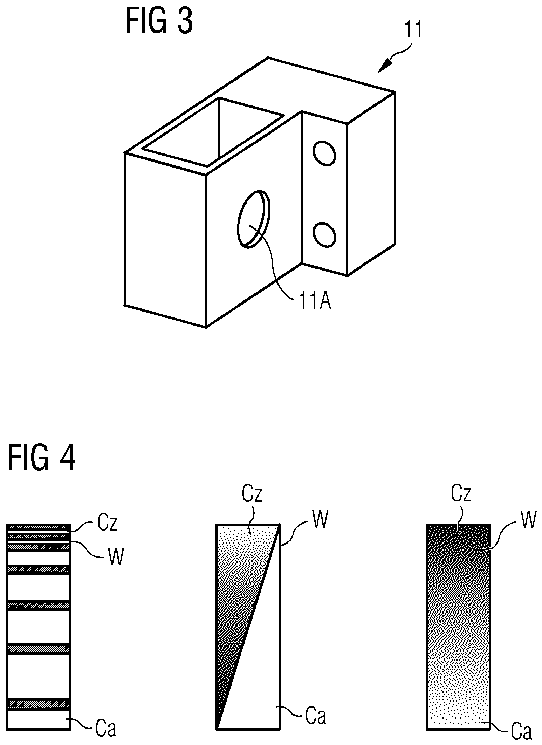

Fig 3 shows a brush holder 11 for use in the brush wear monitoring arrangement of Fig 1. A window 11A or aperture 11A in one side wall of the brush holder 11 allows a corresponding portion W_{view} of the wear indicator W of Fig 2 to be seen when the carbon brush 10 is inserted into the brush holder 11. The diagram also shows the rectangular cavity into which the carbon brush will be inserted, and through-holes through which fasteners can be inserted to mount the brush holder 11 to a component of an electrical machine. For simplicity, the diagram does not show the spring assembly that will apply pressure to a carbon brush inserted in the holder 11.

Fig 4 shows alternative wear indicators W for application to a carbon brush in an embodiment of the inventive brush wear monitoring arrangement. In each embodiment, there is a transition from an initial colour Ca or pattern at one end (for placement near the contact face) to a final colour Cz or pattern at the other end. The colours and/or patterns are chosen so that these can easily be analysed by a simple image processing algorithm to determine the value of the exposed portion W_{view} of the wear indicator W. Here, a value of 100% may correspond to the darkest region of the wear indicator W, while a value of 0% may correspond to the lightest region of the wear indicator W. The value of "grey" (i.e. a mixture of the darkest and lightest values) is relatively easy to establish using a suitable image processing technique, as will be known to the skilled person.

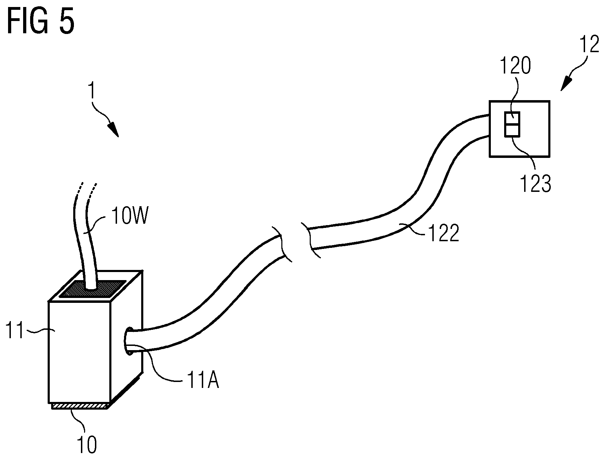

Fig 5 shows a further embodiment of the inventive brush wear monitoring arrangement 1. Here, a light guide 122 extends from the aperture 11A to an camera housing of the monitoring arrangement 1. A flash LED light source 123 and image sensor chip 120 are arranged at the other end of the light guide 122. To capture an image P, the flash 123 can send a light pulse through the light guide 122. This is reflected from the exposed portion W_{view} of the wear indicator W and detected by the image sensor 120. The advantage of this embodiment is that the image sensor 120 does not need a clear view of the aperture, but can be placed at any convenient location, and even very poor lighting conditions inside the generator will have no effect on the image quality.

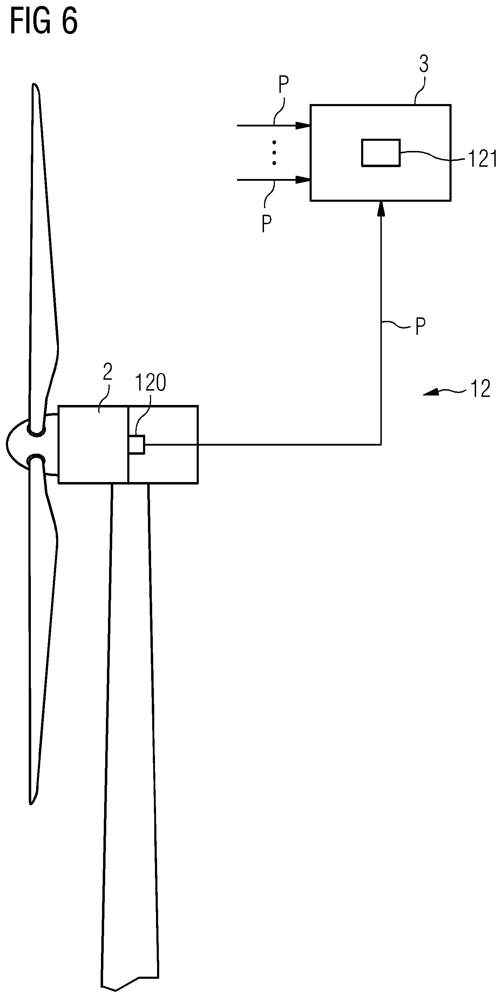

Fig 6 shows an electrical machine 2 - in this case a direct-drive wind turbine generator 2 - with an embodiment of the inventive brush wear monitoring arrangement 1. Several carbon brushes of the same type are arranged about the circumference of a stationary component, for example onto an end plate of the generator stator 2. During operation of the generator, the contact faces of the carbon brushes are pressed against a rotating surface, for example a brake plate that is mounted to the outer rotor. For clarity, these details are not shown here, and have already been explained with the previous diagrams. An image sensor 120 of the monitoring means 12 is provided for at least one carbon brush that has a wear indicator as explained above, and the camera is set up to capture images P of the exposed portion of that wear indicator. The images P collected by the image sensor 120 are transmitted to a control arrangement 3, for example a remote park controller 3, and processed. In this exemplary embodiment, modules of a monitoring means 12 are distributed over the wind turbine 2 and the park controller 3, for example with the image sensor 120 "on site" in the wind turbine, and the corresponding image analysis unit 121 in the remote park controller 3. The wind park can comprise any number of wind turbines, and the park controller 3 can implement a single image analysis unit 121 that processes images P from all wind turbines that are equipped with an embodiment of the inventive brush wear monitoring arrangement.

Since all carbon brushes are of the same type, are replaced simultaneously and exposed to the same conditions during their lifetime, it is sufficient to monitor a single carbon brush for wear. If the monitored brush is deemed to be approaching the end of it useful lifetime, a service procedure is scheduled by the park controller 3, and all carbon brushes are replaced at the same time.

The diagram also indicates that the park controller 3 may receive images P from other wind turbines 2 of the wind park, when each wind turbine is equipped with an embodiment of the inventive brush wear monitoring arrangement. By obtaining real-time data regarding brush wear from all wind turbines of the wind park, it is possible for the park controller 3 to identify any carbon brushes that need replacing, thereby avoiding the risk of LEMP damage through ineffective carbon brushes. Furthermore, by receiving such detailed real-time data from the brush wear monitoring arrangements, it is possible for the park controller 3 to schedule service routines with a favourably high degree of efficiency.

## Claims

1. A brush wear monitoring arrangement (1) comprising
- a carbon brush (10) realised to transfer electric current (Iₕᵢ) between a stationary structure (21) and a rotating structure (22), wherein a side face (10S) of the carbon brush (10) is provided with a visual wear indicator (W),
- a brush holder (11) realised to accommodate the carbon brush (10),
- which holder (11) is provided with an aperture (11A) in one side of the brush holder (11) formed to expose a portion (W_{view}) of the wear indicator (W) when the carbon brush (10) is arranged in the holder (11); and
- a monitoring means (12) for observing the exposed portion (W_{view}) of the wear indicator (W) during usage of the carbon brush (10), which monitoring means (12) comprises an image sensor (120) configured to capture images (P) of the exposed portion (W_{view}) of the wear indicator (W) during usage of the carbon brush (10).

2. A brush wear monitoring arrangement according to claim 1, wherein the wear indicator (W) is provided as a sticker with an adhesive underside for adhering to the side face (10S) of the carbon brush (10).

3. A brush wear monitoring arrangement according to claim 1, wherein the wear indicator (W) comprises a pattern printed onto the side face (10S) of the carbon brush (10).

4. A brush wear monitoring arrangement according to any of the preceding claims, wherein the wear indicator (W) comprises a transition from an initial colour (Ca) to a final colour (Cz).

5. A brush wear monitoring arrangement according to claim 4, wherein the wear indicator (W) comprises a high contrast ratio between the initial colour (Ca) and the final colour (Cz).

6. A brush wear monitoring arrangement according to any of the preceding claims, wherein the wear indicator (W) comprises a transition from black to white.

7. A brush wear monitoring arrangement according to any claims 1 to 5, wherein the wear indicator (W) comprises a sequence of multiple colours.

8. A brush wear monitoring arrangement according to any of the preceding claims, wherein the image sensor (120) is configured to capture images (P) of the exposed portion (W_{view}) of the wear indicator (W) at regular intervals.

9. A brush wear monitoring arrangement according to claim 8, wherein the monitoring means (12) comprises an image analysis unit (121) configured to detect differences in the captured images (P) and to estimate the remaining lifetime of the carbon brush (10) on the basis of the detected differences.

10. A brush wear monitoring arrangement according to any of the preceding claims, comprising a light guide (122) extending between the aperture (11A) and the monitoring means (12).

11. A brush wear monitoring arrangement according to any of the preceding claims, comprising a light source (123) arranged to illuminate the portion (W_{view}) of the wear indicator (W) exposed in the aperture (11A).

12. A brush wear monitoring arrangement according to any of the preceding claims, for use in an electrical machine (2) and comprising a communication interface (15), wherein the communication interface (15) is configured to transmit the images (P) to a control arrangement (3) of the electrical machine (2).

13. A method of monitoring wear on a carbon brush (10), which method comprises
- providing a wear indicator (W) on a side surface (10S) of the carbon brush (10),
- arranging the carbon brush (10) in a brush holder (11),
- providing an aperture (11A) in one side of the brush holder (11), which aperture (11A) is shaped to expose a portion (W_{view}) of the wear indicator (W), and
- monitoring the exposed portion (W_{view}) of the wear indicator (W) to estimate the remaining lifetime of the carbon brush (10) by providing an image sensor (120) configured to capture images (P) of the exposed portion (W_{view}) of the wear indicator (W) during usage of the carbon brush (10).

14. A method according to claim 13, for an electrical machine (2), the method further comprising a step of reporting the estimated remaining lifetime to a remote control arrangement (3) of the electrical machine (2).

15. A wind turbine (2) comprising a generator (20) with a stator (21) and a rotor (22), a number of carbon brushes (10) for transferring electric current (Iₕᵢ) between the rotor (22) and the stator (21), and wherein at least one carbon brush (10) is part of a brush wear monitoring arrangement (1) according to any of claims 1 to 12.

## Patentansprüche

1. Bürstenverschleißüberwachungsanordnung (1), umfassend:
- eine Kohlebürste (10), die dazu umgesetzt ist, elektrischen Strom (Iₕᵢ) zwischen einer stationären Struktur (21) und einer rotierenden Struktur (22) zu übertragen, wobei eine Seitenfläche (10S) der Kohlebürste (10) mit einem visuellen Verschleißindikator (W) versehen ist,
- einen Bürstenhalter (11), der dazu umgesetzt ist, die Kohlebürste (10) zu beherbergen,
- wobei der Halter (11) mit einer Öffnung (11A) auf einer Seite des Bürstenhalters (11) versehen ist, die dazu ausgebildet ist, einen Abschnitt (W_{view}) des Verschleißindikators (W) freizulegen, wenn die Kohlebürste (10) in dem Halter (11) angeordnet ist; und
- ein Überwachungsmittel (12) zum Beobachten des freiliegenden Abschnitts (W_{view}) des Verschleißindikators (W) während der Verwendung der Kohlebürste (10), wobei das Überwachungsmittel (12) einen Bildsensor (120) umfasst, der dazu konfiguriert ist, Bilder (P) des freiliegenden Abschnitts (W_{view}) des Verschleißindikators (W) während der Verwendung der Kohlebürste (10) aufzunehmen.

2. Bürstenverschleißüberwachungsanordnung nach Anspruch 1, wobei der Verschleißindikator (W) als ein Aufkleber mit einer Klebeunterseite zum Anhaften an der Seitenfläche (10S) der Kohlebürste (10) bereitgestellt ist.

3. Bürstenverschleißüberwachungsanordnung nach Anspruch 1, wobei der Verschleißindikator (W) ein Muster umfasst, das auf die Seitenfläche (10S) der Kohlebürste (10) gedruckt ist.

4. Bürstenverschleißüberwachungsanordnung nach einem der vorhergehenden Ansprüche, wobei der Verschleißindikator (W) einen Übergang von einer Anfangsfarbe (Ca) zu einer Endfarbe (Cz) umfasst.

5. Bürstenverschleißüberwachungsanordnung nach Anspruch 4, wobei der Verschleißindikator (W) ein hohes Kontrastverhältnis zwischen der Anfangsfarbe (Ca) und der Endfarbe (Cz) umfasst.

6. Bürstenverschleißüberwachungsanordnung nach einem der vorhergehenden Ansprüche, wobei der Verschleißindikator (W) einen Übergang von Schwarz zu Weiß umfasst.

7. Bürstenverschleißüberwachungsanordnung nach einem der Ansprüche 1 bis 5, wobei der Verschleißindikator (W) eine Abfolge von mehreren Farben umfasst.

8. Bürstenverschleißüberwachungsanordnung nach einem der vorhergehenden Ansprüche, wobei der Bildsensor (120) dazu konfiguriert ist, Bilder (P) des freiliegenden Abschnitts (W_{view}) des Verschleißindikators (W) in regelmäßigen Intervallen aufzunehmen.

9. Bürstenverschleißüberwachungsanordnung nach Anspruch 8, wobei das Überwachungsmittel (12) eine Bildanalyseeinheit (121) umfasst, die dazu konfiguriert ist, Unterschiede in den aufgenommenen Bildern (P) zu erfassen und die verbleibende Lebensdauer der Kohlebürste (10) basierend auf den erfassten Unterschieden zu schätzen.

10. Bürstenverschleißüberwachungsanordnung nach einem der vorhergehenden Ansprüche, umfassend einen Lichtleiter (122), der sich zwischen der Öffnung (11A) und dem Überwachungsmittel (12) erstreckt.

11. Bürstenverschleißüberwachungsanordnung nach einem der vorhergehenden Ansprüche, umfassend eine Lichtquelle (123), die dazu angeordnet ist, den Abschnitt (W_{view}) des Verschleißindikators (W), der in der Öffnung (11A) freiliegt, zu beleuchten.

12. Bürstenverschleißüberwachungsanordnung nach einem der vorhergehenden Ansprüche zur Verwendung in einer elektrischen Maschine (2) und umfassend eine Kommunikationsschnittstelle (15), wobei die Kommunikationsschnittstelle (15) dazu konfiguriert ist, die Bilder (P) an eine Steueranordnung (3) der elektrischen Maschine (2) zu übertragen.

13. Verfahren zum Überwachen von Verschleiß an einer Kohlebürste (10), wobei das Verfahren Folgendes umfasst:
- Bereitstellen eines Verschleißindikators (W) an einer Seitenoberfläche (10S) der Kohlebürste (10),
- Anordnen der Kohlebürste (10) in einem Bürstenhalter (11),
- Bereitstellen einer Öffnung (11A) in einer Seite des Bürstenhalters (11), wobei die Öffnung (11A) dazu geformt ist, einen Abschnitt (W_{view}) des Verschleißindikators (W) freizulegen, und
- Überwachen des freiliegenden Abschnitts (W_{view}) des Verschleißindikators (W), um die verbleibende Lebensdauer der Kohlebürste (10) zu schätzen, indem ein Bildsensor (120) bereitgestellt wird, der dazu konfiguriert ist, Bilder (P) des freiliegenden Abschnitts (W_{view}) des Verschleißindikators (W) während der Verwendung der Kohlebürste (10) aufzunehmen.

14. Verfahren nach Anspruch 13 für eine elektrische Maschine (2), wobei das Verfahren ferner einen Schritt des Meldens der geschätzten verbleibenden Lebensdauer an eine Fernsteuerungsanordnung (3) der elektrischen Maschine (2) umfasst.

15. Windkraftanlage (2), umfassend einen Generator (20) mit einem Stator (21) und einem Rotor (22), eine Anzahl von Kohlebürsten (10) zum Übertragen von elektrischem Strom (Iₕᵢ) zwischen dem Rotor (22) und dem Stator (21) und wobei mindestens eine Kohlebürste (10) Teil einer Bürstenverschleißüberwachungsanordnung (1) nach einem der Ansprüche 1 bis 12 ist.

## Revendications

1. Agencement de surveillance d'usure de balai (1) comprenant :
- un balai de carbone (10) réalisé pour transférer un courant électrique (Iₕᵢ) entre une structure stationnaire (21) et une structure rotative (22), dans lequel une face latérale (10S) du balai de carbone (10) est pourvue d'un indicateur d'usure visuel (W),
- un porte-balai (11) réalisé pour recevoir le balai de carbone (10),
- lequel porte-balai (11) est pourvu d'une ouverture (11A) dans un côté du porte-balai (11) formée pour exposer une portion (W_{view}) de l'indicateur d'usure (W) lorsque le balai de carbone (10) est agencé dans le porte-balai (11) ; et
- un moyen de surveillance (12) pour l'observation de la portion exposée (W_{view}) de l'indicateur d'usure (W) pendant l'utilisation du balai de carbone (10), lequel moyen de surveillance (12) comprend un capteur d'images (120) configuré pour capturer des images (P) de la portion exposée (W_{view}) de l'indicateur d'usure (W) pendant l'utilisation du balai de carbone (10).

2. Agencement de surveillance d'usure de balai selon la revendication 1, dans lequel l'indicateur d'usure (W) est fourni sous la forme d'un autocollant avec une face inférieure adhésive pour l'adhérence à la face latérale (10S) du balai de carbone (10).

3. Agencement de surveillance d'usure de balai selon la revendication 1, dans lequel l'indicateur d'usure (W) comprend un motif imprimé sur la face latérale (10S) du balai de carbone (10).

4. Agencement de surveillance d'usure de balai selon l'une quelconque des revendications précédentes, dans lequel l'indicateur d'usure (W) comprend une transition d'une couleur initiale (Ca) à une couleur finale (Cz).

5. Agencement de surveillance d'usure de balai selon la revendication 4, dans lequel l'indicateur d'usure (W) comprend un rapport de contraste élevé entre la couleur initiale (Ca) et la couleur finale (Cz).

6. Agencement de surveillance d'usure de balai selon l'une quelconque des revendications précédentes, dans lequel l'indicateur d'usure (W) comprend une transition du noir au blanc.

7. Agencement de surveillance d'usure de balai selon l'une quelconque des revendications 1 à 5, dans lequel l'indicateur d'usure (W) comprend une séquence de multiples couleurs.

8. Agencement de surveillance d'usure de balai selon l'une quelconque des revendications précédentes, dans lequel le capteur d'images (120) est configuré pour capturer des images (P) de la portion exposée (W_{view}) de l'indicateur d'usure (W) à des intervalles réguliers.

9. Agencement de surveillance d'usure de balai selon la revendication 8, dans lequel le moyen de surveillance (12) comprend une unité d'analyse d'image (121) configurée pour détecter des différences dans les images capturées (P) et pour estimer la durée de vie restante du balai de carbone (10) sur la base des différences détectées.

10. Agencement de surveillance d'usure de balai selon l'une quelconque des revendications précédentes, comprenant un guide de lumière (122) s'étendant entre l'ouverture (11A) et le moyen de surveillance (12).

11. Agencement de surveillance d'usure de balai selon l'une quelconque des revendications précédentes, comprenant une source de lumière (123) agencée pour éclairer la portion (W_{view}) de l'indicateur d'usure (W) exposée dans l'ouverture (11A).

12. Agencement de surveillance d'usure de balai selon l'une quelconque des revendications précédentes, pour l'utilisation dans une machine électrique (2) et comprenant une interface de communication (15), dans lequel l'interface de communication (15) est configurée pour transmettre les images (P) à un agencement de commande (3) de la machine électrique (2).

13. Procédé de surveillance d'usure sur un balai de carbone (10), lequel procédé comprend :
- la fourniture d'un indicateur d'usure (W) sur une surface latérale (10S) du balai de carbone (10),
- l'agencement du balai de carbone (10) dans un porte-balai (11),
- la fourniture d'une ouverture (11A) dans un côté du porte-balai (11), laquelle ouverture (11A) est formée pour exposer une portion (W_{view}) de l'indicateur d'usure (W), et
- la surveillance de la portion exposée (W_{view}) de l'indicateur d'usure (W) pour estimer la durée de vie restante du balai de carbone (10) par la fourniture d'un capteur d'images (120) configuré pour capturer des images (P) de la portion exposée (W_{view}) de l'indicateur d'usure (W) pendant l'utilisation du balai de carbone (10).

14. Procédé selon la revendication 13, pour une machine électrique (2), le procédé comprenant en outre une étape de signalement de la durée de vie restante estimée à un agencement de commande à distance (3) de la machine électrique (2).

15. Éolienne (2) comprenant un générateur (20) avec un stator (21) et un rotor (22), un certain nombre de balais de carbone (10) pour le transfert d'un courant électrique (Iₕᵢ) entre le rotor (22) et le stator (21), et dans laquelle au moins un balai de carbone (10) fait partie d'un agencement de surveillance d'usure de balai (1) selon l'une quelconque des revendications 1 à 12.
